# EUROPEAN PATENT SPECIFICATION

(11) **EP 3 747 262 B1**
(45) Date of publication and mention of the grant of the patent: **22.02.2023**
(21) Application number: 19743476.4
(22) Date of filing: 23.01.2019
(51) Int. Cl.: A01G 33/00, B09B 3/00, C07G 99/00, C05D 9/02

(54) **PRODUCTION METHOD FOR IRON FULVATE SOLUTION, IRON HYDROXIDE FULVATE SOLUTION, AND POLYSILICA IRON FULVATE SOLUTION**
VERFAHREN ZUR HERSTELLUNG EINER EISENFULVATLÖSUNG, EISENHYDROXID-FULVATLÖSUNG UND POLYSILICA-EISENFULVATLÖSUNG
PROCÉDÉ DE PRODUCTION DE SOLUTION DE FULVATE DE FER, SOLUTION DE FULVATE D'HYDROXYDE DE FER ET SOLUTION DE FULVATE DE FER ET DE POLYSILICE

(30) Priority: 29.01.2018 JP 2018012266; 29.01.2018 JP 2018012267; 29.01.2018 JP 2018012268
(43) Date of publication of application: 09.12.2020
(73) Proprietor: G-8 International Trading Co., Ltd., Hiratsuka-shi, Kanagawa 254-0807 (JP)
(72) Inventor: MATSUI, Saburo, Kanagawa 254-0807 (JP)
(74) Representative: Jacobacci Coralis Harle
(86) International application number: PCT/JP2019/001951
(87) International publication number: WO 2019/146610

(56) References cited:
- WO-A1-2014/038596
- JP-A- 2005 081 332
- JP-A- 2011 121 788
- JP-A- 2012 254 450
- JP-A- 2016 022 468
- KR-A- 20150 137 532

## Description

### TECHNICAL FIELD

The present invention relates to production methods for an iron fulvate solution, an iron hydroxide fulvate solution and a polysilica-iron fulvate solution.

### BACKGROUND ART

In the natural world, fulvic acid is produced in a humic substance created by humification of leaves and stems of plans. Then, under the absence of oxygen in the soil, this fulvic acid binds with iron dissolved in water by a chelating action, to produce iron fulvate. This iron fulvate is carried to sea via rivers to contribute to growing of phytoplanktons and seaweeds. In recent years, it has been reported that the iron fulvate contributes to prevention of so-called "rocky-shore denudation", decomposition of seafloor sediments, and purification of rivers.

Further, in fishing grounds, influences of the inflow of muddy water, the deficiency of iron or the like on fishery resources have also been pointed out.

As above, in the natural world, an encounter between fulvic acid and iron is governed by contingency. Further, in production methods described in the following Patent Documents 1 and 2, a production volume of fulvic acid is unclear. Moreover, these production methods have difficulty in controlling the production volume, and fail to solve a problem that a fulvic acid-containing material cannot be stably supplied, and production cost is relatively high.

Therefore, in order to solve the above conventional problem, the following Patent Document 3 proposes a fulvic acid-containing material production method, which is characterized in that a liquid material comprising an iron silicate-based material is mixed with a fermented material in which fulvic acid is produced through fermentation and sterilization treatments of organic waste, and the resulting mixture is subjected to aging.

In this production method, a liquid material comprising iron silicate is mixed with a material obtained by subjecting organic waste to fermentation and sterilization treatments, and, during aging of the resulting mixture, a chelate reaction is induced between fulvic acid produced in the course of the fermentation and sterilization treatments of the organic waste and an iron component of the iron silicate-based material, so that there is a possibility that an iron fulvate material containing soluble silica can be produced stably at low cost. However, due to the need for the fermentation and sterilization treatments, there is still a problem that it is necessary to take a significantly long period of time for producing iron fulvate.

### CITATION LIST

Patent Document 1: JP 2005-034140A
Patent Document 2: JP 4710036B
Patent Document 3: WO2014/038596A

### SUMMARY OF INVENTION

### [Technical Problem]

It is therefore an object of the present invention to provide an iron fulvate production method capable of producing an iron fulvate solution, an iron hydroxide fulvate solution and a polysilica-iron fulvate solution efficiently within a short period of time.

### [Solution to Technical Problem]

The above object is achieved by:
- iron fulvate solution production methods according to claims 1 or 2;
- iron hydroxide fulvate solution production methods according to anyone of claims 3 to 6;
- polysilica-iron fulvate solution production methods according to anyone of claims 7 to 10.

Other advantageous and non limiting features of the methods according the invention may be:
- the iron material is in the form of at least one selected from the group consisting of a pellet (or tablet or briquette), a powder, a chip, and a line;
- the woody plant material is a felled timber or wood scrap;
- the felled timber is obtained from a broad-leaved tree or a needle-leaved tree;
- the broad-leaved tree is at least one selected from the group consisting of white birch (Betula platyphylla), willow (Salicaceae), chestnut tree (Castanea crenata), oak (Quercus), and beech (Fagus crenata);
- the needle-leaved tree is at least one selected from the group consisting of pine (Pinus), Japanese cedar (Cryptomeria japonica), Japanese cypress (Chamaecyparis obtusa), and Hiba (Thujopsis dolabrata);
- the wood scrap is solid wood or plywood;
- the processing step is performed for 30 minutes to 12 hours;
- the woody plant material is a broad-leaved tree, wherein the pressure of steam to be introduced in the processing step is in the range of 0.5 to 2.5 MPa (5 to 25 atm);
- the woody plant material is a needle-leaved tree, wherein the pressure of steam to be introduced in the processing step is in the range of 2 to 3.5 MPa (20 to 35 atm);
- the herbaceous plant material is felled or mowed plant, or a plant scrap;
- the felled or mowed plant is at least one selected from the group consisting of rice (Oryza sativa), wheat (Triticum aestivum), barley (Hordeum vulgare), oat (Avena fatua), rye (Secale cereale), proso millet (Panicum miliaceum), foxtail millet (Setaria italica), Japanese millet (Echinochloa esculenta), corn (Zea mays), finger millet (Eleusine coracana), sorghum (Sorghum bicolor), bamboo (Bambusoideae), manchurian wild rice (Zizania latifolia), sugar cane (Saccharum officinarum), adlay (Coix lacryma-jobi var. ma-yuen), reed (Phragmites australis), Japanese silver grass (Miscanthus sinensis), arrow bamboo (Pseudosasa japonica), giant reed (Arundo donax), pampas grass (Cortaderia selloana), and lawn grass;
- the felled or mowed plant is rice straw or wheat straw;
- the felled or mowed plant is bamboo;
- the bamboo is formed in a chip shape;
- the raw material is a post-use plant scrap;
- the plant scrap is an aging tatami mat;
- the processing step is performed for 30 minutes to 12 hours;
- the woody plant material or the herbaceous plant material is introduced into the processing space in an amount of 90% by volume or less of the processing space;
- the woody plant material or the herbaceous plant material is introduced into the processing space in an amount of 50 to 80% by volume or less of the processing space;
- the stirring in the processing step is performed by a stirring member rotatably disposed in the processing space;
- the raw material input step includes adding an alkaline solution as an additive.

### [Effect of Invention]

As mentioned above, the production methods of the present invention have no need for a time-consuming step such as fermentation or aging in the process of production of iron fulvate, iron hydroxide fulvate and polysilica-iron fulvate, so that it is possible to produce an iron fulvate solution, an iron hydroxide fulvate solution and a polysilica-iron fulvate solution more stably within a significantly shorter period of time than before.

### BRIEF DESCRIPTION OF DRAWINGS

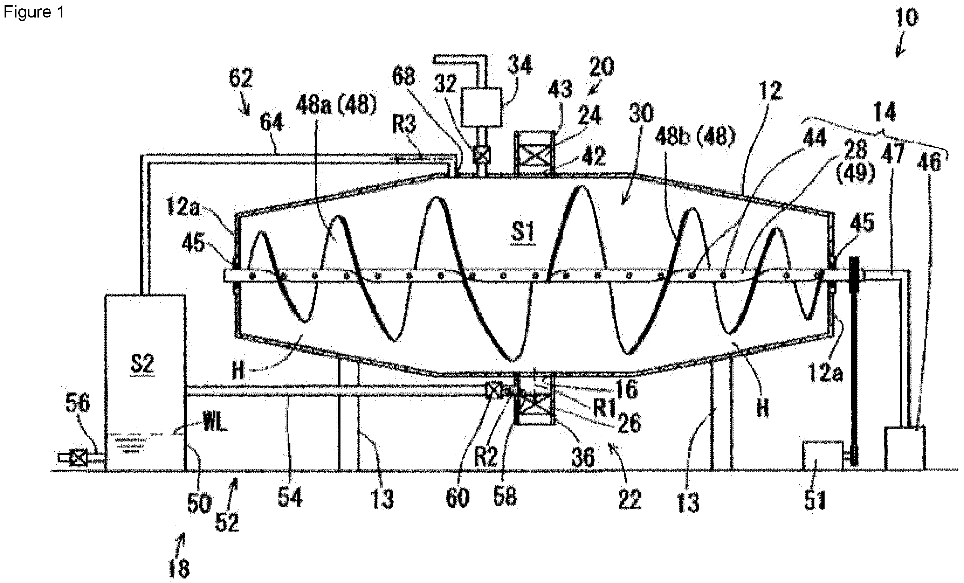

FIG. 1 is a sectional view showing one example of a production apparatus capable of being used in common for implementing an iron fulvate solution production method, an iron hydroxide fulvate solution production method and a polysilica-iron fulvate solution production method according to embodiments of the present invention.

### DESCRIPTION OF EMBODIMENTS

An iron fulvate solution production method, an iron hydroxide fulvate solution production method and a polysilica-iron fulvate solution production method of the present invention will now be described based on respective embodiments thereof.

First of all, an iron fulvate solution production method according to a first embodiment of the present invention will be described. One example of a production apparatus (processing apparatus) 10 for implementing this production method will first be described. It should be noted here that this production apparatus can be used in common for implementing iron hydroxide fulvate solution and polysilica-iron fulvate solution production methods according to second and third embodiments of the present invention which will be described later.

FIG. 1 is a sectional view of the production apparatus.

The production apparatus 10 comprises: a hermetic container 12 internally having a closeable space S1 capable of containing a raw material composed of fragmented pieces of a woody plant material or a gramineous plant; a steam jetting device 14 operable to jet, into the hermetic container 12, high-temperature and high-pressure steam which is subcritical water; an outlet port 16 provided at the bottom of the hermetic container 12 and associated with an after-mentioned opening-closing mechanism 26; and a separation-collection device 18 operable to separate and collect liquid from a processed raw material, only by operation of directly discharging the liquid from the outlet port 16. While the hermetic container 12 may have any shape, such as a rectangular box-like shape, a three-dimensional polygonal cylindrical shape, a circular cylindrical shape, a barrel-like shape, or a drum-like shape, it preferably has a shape which enables the liquid to be gravitationally discharged from the outlet port 16 which is provided in a bottom wall thereof. The lower wall of the hermetic container is preferably provided to extend obliquely downwardly toward the outlet port.

The separation-collection device 18 may comprise: a liquid collection unit 50 having a second closeable space S2 different from the first closeable space S1 of the hermetic container 12 and communicated with an inside of the hermetic container 12 through the outlet port 16; and a gravity flow-based collection mechanism 52 for causing only the liquid in the hermetic container 12 to be collected to the liquid collection unit 50 through the outlet port 16 by gravity flow. The processed raw material as a solid located around the outlet port 16 remains as-is within the hermetic container 12, and only the liquid gravitationally flows toward the liquid collection unit 50, so that the liquid can be separated and collected from the raw material. As long as the liquid collection unit 50 has the closable space S2 for storing the collected liquid, it may be constructed in any configuration, such as a metal tank, a three-dimensional polygonal housing or a tubular body. The liquid collection unit 50 may be formed plurally.

The gravity flow-based collection mechanism 52 may comprise a pressure equalization device 62 for equalizing pressures of the closeable space S1 of the hermetic container 12 and the closeable space S1 of the liquid collection unit 50. By always equalizing internal pressures of the hermetic container 12 and the liquid collection unit 50, it becomes possible to enable a liquid collection operation to be performed immediately after completion of the processing.

Although the above production apparatus has been described based on one example in which separation means is incorporated in the processing apparatus, the separation means may be provided separately without providing it in the processing apparatus itself.

Further, a pressure equalization device 62 for equalizing pressures of the closeable space S1 of the hermetic container 12 and the closeable space S2 of the liquid collection unit 50 may be provided. The pressure equalization device 62 may comprise a pressure-equalizing communication pipe 64 for providing fluid communication between the closeable space S1 of the hermetic container 12 and the closeable space S2 of the liquid collection unit 50, to serve as a second path different from a first liquid collection path through the outlet port 16. The pressure-equalizing communication pipe 64 may be configured to always provide fluid communication between the closeable space S1 and the closeable space S2 to always keep internal pressures of the hermetic container 12 and the liquid collection unit 50 in an equalized state. As long as the pressure-equalizing communication pipe 64 is capable of providing fluid communication between the hermetic container 12 and the liquid collection unit 50 to equalize pressures thereof, at least before the liquid collection operation, it may be provided with an opening-closing mechanism for setting the pressure-equalizing communication pipe to a communicating state or a non-communication state.

The fluid communication between the pressure-equalizing communication pipe 64 and the hermetic container 50, which forms the second path, may be performed through a communication pipe connection portion 68 provided at an upper end of the hermetic container 12

The gravity flow-based collection mechanism 52 may comprise a liquid collection flow passage 54 for communicatably connecting the outlet port 16 of the hermetic container 12 and the liquid collection unit 50, wherein the liquid collection flow passage 54 is provided to extend horizontally or obliquely downwardly from one end thereof communicated with the outlet port 16 toward the liquid collection unit 50.

Further, an opening-closing mechanism 26 may be provided in the middle of a discharge path R1 extending from the outlet port 16 to discharge the processed raw material, wherein a liquid inlet 58 of the liquid collection flow passage 54 may be communicatably connected to the discharge path R1 at a position upstream of the opening-closing mechanism 26.

The liquid collection flow passage 54 may be provided with an opening-closing mechanism 60 for selectively switching between the communicating and non-communicating states of the flow passage in such a manner as to set the flow passage to the non-communicating state during processing of the raw material within the hermetic container 12, and set the flow passage to the communicating state during the operation of collecting only the liquid after completion of the processing.

The liquid collection unit 50 may be disposed such that the bottom of the closeable space S2 thereof is located at a height position lower than the outlet port 16 of the hermetic container 12.

Further, the liquid collection unit 50 may be configured such that a liquid level WL of the liquid collected within the closeable space S2 thereof is always at a height position lower than the outlet port 16.

The hermetic container 12 may be internally provided with a stirring device 30 for stirring the raw material.

Further, the hermetic container 12 may be formed in a lying barrel-like shape which is provided with the outlet port 16 at the bottom in a longitudinal (in FIG. 1, a rightward-leftward directional) central region thereof and whose diameter is gradually reduced in a direction from the longitudinal central region toward each of longitudinally opposite ends thereof, and the stirring device 30 may comprise: a rotary shaft 49 provided inside the hermetic container 12 to extend longitudinally and supported rotatably and pivotally with respect to the hermetic container 12; and a stirring blade 48 attached onto the rotary shaft 49 and having a region expanding in a circumferential direction of the rotary shaft 49, wherein the stirring blade 48 may be formed such that the length thereof between the rotary shaft 49 and a distal edge thereof is maximized at a longitudinal central position of the rotary shaft 49 and gradually reduced toward each of longitudinally opposite ends of the rotary shaft 49, in conformity to the lying barrel-like shape of the hermetic container 12.

The steam jetting device 14 may comprise a rotary shaft-cum-steam jetting pipe 28 obtained by preparing the rotary shaft 49 in the form of a hollow pipe, and forming a plurality of steam jetting holes 44 in a peripheral wall of the hollow pipe.

In this example, the hermetic container 12 is supported by a support leg 13 such that it is disposed at a certain height position above the ground. The hermetic container 12 is formed in a lying barrel-like shape whose diameter is gradually reduced in a direction from the longitudinal central region toward each of two end walls 12a at the longitudinally opposite ends thereof. For example, the hermetic container 12 is formed by processing a metal plate to exhibit heat resistance and pressure resistance and have a size enough to contain the raw material in a volume of about 2 m³. The hermetic container 12 has an input section (supply section) 20 and a discharge section 22 which are provided, respectively, on an upper side of the central region thereof and on a lower side of of the central region thereof, and configured to be selectively opened and closed, respectively, by an opening-closing mechanism 24 and an opening-closing mechanism 26. The closeable space S1 of the hermetic container 12 receives therein an after-mentioned steam jetting pipe 28 constituting the steam jetting device 14, and a stirring device 30 for stirring the raw material. The hermetic container 12 is provided with a safety valve (relief valve) 32 operable, when the internal pressure becomes greater than a setup value, to release internal steam, e.g., capable of adjusting the setup value. Further, a sound-deadening and odor-eliminating device 34 is provided in the middle of a relief pipe connected to the safety valve 32, so that steam relieved via the safety valve 32 is subjected to sound-deadening and odor-eliminating, and then discharged toward the external air.

As shown in FIG. 1, the outlet port 16 is opened in a bottom wall of the longitudinal central region of the hermetic container 12, such that a processed raw material is discharged downwardly. The outlet port 16 is formed to have a diameter, for example, of about 300 mm. A cylindrical discharge sleeve 36 protruding downwardly is connected to the outlet port 16 to form the processed raw material discharge path R1, and the opening-closing mechanism 26 is provided in the middle of the discharge path R1 so as to selectively open and close the outlet port 16. That is, the discharge section 22 is constructed such that it comprises the outlet port 16, the discharge sleeve 36 and the opening-closing mechanism 26. The hermetic container 12 is formed in a lying barrel-like shape, so that it becomes possible to facilitate enabling the internal raw material to gravitationally gather toward the central region provided with the outlet port 16, and to discharge the processed raw material via the outlet port 16 simply by opening the opening-closing mechanism 26.

In the input section 20, an input port 42 is opened in a top wall of the hermetic container 12, and a cylindrical input sleeve 43 protruding upwardly is connected to the input port 42. The opening-closing mechanism 24 is composed, for example, of a ball valve, and provided inside the input sleeve 43 so as to selectively open and close the input sleeve 43. The opening-closing mechanism 24 is operable to open the input port 42 to enable the raw material to be input therethrough, and, during the processing, to to close the input port 42 to maintain the closable space S1 of the hermetic container 12 in a closed state.

The steam jetting device 14 is operable to jet high-temperature and high-pressure steam into the hermetic container 12 to set the inside of the hermetic container 12 to a high-temperature and high-pressure state and thus process the raw material through the steam. As shown in FIG. 1, the steam jetting device 14 comprises: a steam jetting pipe 28 disposed within the hermetic container 12 and composed of a hollow pipe having a peripheral wall formed with a large number of steam jetting holes 44; and a steam delivery pipe 47 for delivering steam from a steam generator 46 into the steam jetting pipe 28. In order to adequately process the raw material, steam to be jetted from the steam jetting device 14 into the hermetic container 12 is set at a high temperature and a high pressure which are equivalent to those of subcritical water. For example, steam to be jetted from the steam jetting pipe 28 is set at a temperature of about 100 to 250°C and a pressure of about 5 to 35 atm. As a result, the inside of the hermetic container 12 is set at a temperature of about 100 to 250°C and a pressure of about 0.5 to 3.5 MPa (5 to 35 atm). The steam jetting pipe 28 is disposed to extend horizontally (longitudinally) at an approximately central position in an upward-downward direction of the hermetic container 12, and supported rotatably and pivotally by the end walls 12a through bearings 45. That is, the steam jetting pipe 28 is configured to radially jet steam while being rotated about a horizontal axis thereof, thereby applying steam directly to the raw material. Further, the steam jetting pipe 28 is configured to be rotated by rotational drive force obtained from a rotational drive unit 51 such as a motor through a chain or the like, wherein an after-mentioned stirring blade 48 constituting the stirring device is attached to the steam jetting pipe 28. Thus, the steam jetting pipe 28 additionally serves as an after-mentioned rotary shaft 49 of the stirring device. That is, in this embodiment, the steam jetting device 14 comprises a rotary shaft-cum-steam jetting pipe 28 obtained by preparing the rotary shaft 49 of the stirring device in the form of a hollow pipe, and forming a plurality of steam jetting holes in a peripheral wall of the hollow pipe. Here, the steam jetting device is not limited to this configuration, but may have any other suitable configuration, such as a configuration in which steam is jetted from a distal end of a pipe inserted into the hermetic container, or a configuration in which a plurality of the steam jetting pipes are arranged within the hermetic container.

The stirring device 30 is provided as a means to stir the raw material to be processed in the hermetic container, so as to process the raw material evenly and promptly. The stirring device 30 comprises a rotary shaft 49 composed of the steam jetting pipe 28, and a stirring blade 48 attached onto the rotary shaft 49 and having a region expanding in a circumferential direction of the rotary shaft 49. In this embodiment, the stirring blade 48 is composed of a right-handed helical blade 48a and a left-handed helical blade 48b which are provided such that helical directions thereof are inverted at an approximately axial central position of the rotary shaft 49. The stirring blade 48 is formed such that the length thereof between the rotary shaft and a distal edge thereof is gradually reduced from a longitudinal central position of the rotary shaft and toward each of the longitudinally opposite ends of the rotary shaft. This makes it possible to reliably stir the raw material in conformity to the lying barrel-like shape of the hermetic container 12. Further, the stirring blade 48 is disposed such that a certain amount of gap H is formed between the distal edge of the blade and an inner wall surface of the hermetic container 12. The helical blades 48a, 48b are capable of stirring the raw material while conveying the raw material from the central region toward the end walls of the hermetic container and breaking the solid-form raw material. The raw material conveyed to the end walls 12a by the stirring blade 48 is pushed by a raw material subsequently conveyed to the end walls 12a, and returned to the central region through the gap H along the inner wall surface of the hermetic container 12. It should be understood that the stirring device 30 is not limited to the above configuration, but may have any other suitable configuration.

The separation-collection device 18 is provided as means to, after completion of the steaming, separate and collect liquid from the processed raw material in the hermetic container 12, only by operation of directly discharging the liquid from the outlet port. As shown in FIG. 1, the separation-collection device 18 comprises: a liquid collection unit 50 communicated with the inside of the hermetic container 12 through the outlet port 16; and a gravity flow-based collection mechanism 52 for causing the liquid to be collected to the liquid collection unit 50 through the outlet port 16 by gravity flow.

The liquid collection unit 50 is a second hermetic container internally having a second closeable space S2 different from the first closeable space S1 of the hermetic container 12. For example, the liquid collection unit 50 is composed of a metal cylindrical-shaped hermetic tank having heat resistance and pressure resistance. The liquid collection unit 50 is communicatably connected to the outlet port 16 of the hermetic container 12 via a liquid collection flow passage 54 formed, for example, of a metal pipe member. The liquid collection unit 50 is disposed such that the bottom of the closeable space S2 thereof is located at a height position lower than the outlet port 16 of the hermetic container 12, and a liquid level WL of the liquid collected within the closeable space S2 is always at a height position lower than the outlet port 16, whereby the liquid around the outlet port is easy to gravitationally flow toward the liquid collection unit in a smooth manner. The liquid collection unit 50 is provided with a drain 56 for extracting the collected liquid. The drain 56 is configured to be selectively opened and closed by an on-off valve.

The gravity flow-based collection mechanism 52 is provided as a means to enable only liquid accumulated in the hermetic container 12 to flow from the outlet port to the liquid collection unit 50 by gravity flow. The gravity flow-based collection mechanism 52 comprises the liquid collection flow passage 54, wherein the liquid collection flow passage 54 has an liquid inlet 58 communicatably connected to the outlet port 16, and forms a liquid collection path R2 branched from the processed raw material discharge path R1. In this embodiment, the liquid collection flow passage 54 is composed, for example, of a metal pipe having an inner diameter of about 6 mm. The liquid collection flow passage 54 is provided with an opening-closing mechanism 60 for selectively switching between the communicating and non-communicating states of the flow passage. The opening-closing mechanism 60 is switched in such a manner as to set the flow passage to the non-communicating state during processing of the raw material within the hermetic container 12, and set the flow passage to the communicating state during the operation of collecting only the liquid after completion of the processing. Thus, as well as the raw material, liquid derived from liquefaction of moisture or vapor contained in the raw material, with bacteria and malodorous components contained in the raw materials, can be processed by the high-temperature and high-pressure stream. Therefore, after completion of the processing, the liquid can be separated and collected in a state after destroying bacteria, and decomposing malodorous and harmful components, etc.

The liquid inlet 58 of the liquid collection flow passage 54 is communicatably connected to the processed raw material drain path R1 at a position upstream of the opening-closing mechanism 26. Thus, the liquid is separated and collected through the outlet port by closing the opening-closing mechanism 26 of the outlet port 16 (in the discharge sleeve 36), and, in this state, opening the opening-closing mechanism 60 of the liquid collection flow passage 54 to set the liquid collection flow passage to the communicating state. The liquid collection flow passage 54 is connected to the discharge sleeve 36 in orthogonal relation, i.e., the liquid collection path R2 is provided in orthogonal relation to the processed raw material discharge path R1. That is, the discharge section 22 and the gravity flow-based collection mechanism 52 are arranged such that, in the closed state of the opening-closing mechanism 26, the liquid flows in a direction intersecting with a direction along which a deposition pressure of the processed raw material in the hermetic container is applied. This makes it less likely for the processed raw material to enter the liquid inlet 58, in a simplified structure, so that it becomes possible to enable only the liquid through to gravitationally flow through the liquid collection flow passage 54 so as to perform good separation and collection of the liquid. If momentum of a flow of the liquid from the hermetic container 12 into the liquid inlet 58 is excessively strong, the processed raw material is likely to flow into the liquid inlet 58 together with the liquid by a flow force of the liquid. Thus, a connection structure with the liquid collection flow passage, the liquid inlet 58 or the like is preferably configured to form a flow which is gentle enough not to carry the processed raw material. The liquid collection flow passage 54 is provided to extend generally horizontally from one end (liquid inlet) communicated with the outlet port 16 toward the liquid collection unit. Thus, the liquid smoothly flows through the liquid collection flow passage, and gravitationally flows from the outlet port and the liquid collection unit. The liquid collection flow passage 54 may be disposed obliquely downwardly toward the liquid collection unit, to enable the liquid to more smoothly flow through the liquid collection flow passage 54. In this case, for example, the liquid collection flow passage 54 may be configured such that a part thereof on the side of the liquid inlet 58 extends horizontally by a certain length from the liquid inlet 58, and the remaining part extends obliquely downwardly. The liquid inlet 58 may be provided with a filter or the like, as needed.

Further, as shown in FIG. 1, the gravity flow-based collection mechanism 52 comprises a pressure equalization device 62 for equalizing pressures of the closeable space S1 of the hermetic container 12 and the closeable space S2 of the liquid collection unit 50. In a normal operation, the inside of the hermetic container 12 after completion of the processing has a relatively high pressure. Thus, in the liquid collection flow passage, a pressing force acts toward the closable space S2 of the liquid collection unit having an internal pressure less than the inside of the hermetic container 12, due to a pressure difference therebetween. Under action of such a pressing force, the processed raw material is liable to flow into the liquid collection flow passage 54 together with the liquid, so that it becomes difficult to separate and collect the liquid from the processed raw material, and the liquid collection flow passage is highly likely to be clogged with the processed raw material. In this embodiment, in advance of the liquid collection operation, pressures of the two closeable spaces S1, S2 of the hermetic container 12 and the liquid collection unit 50 can be equalized by the pressure equalization device 62. This makes it possible to prevent the processed raw material from forcedly flowing into the liquid collection flow passage due to the pressure difference between the two closeable spaces S1, S2, and thus appropriately collect the liquid to the liquid collection unit while separating the liquid from the processed raw material, by means of gravity flow. Further, the separation and collection operation can be performed even when the inside of the hermetic container after completion of the processing is in a high-pressure state, so that it becomes possible to shorten a period of time required for the operation.

The pressure equalization device 62 comprises a pressure-equalizing communication pipe 64 for providing fluid communication between the closeable space S1 of the hermetic container 12 and the closeable space S2 of the liquid collection unit 50, via a path R3 different from the liquid collection path R2 (liquid collection flow passage 54) through the outlet port 16. For example, the pressure-equalizing communication pipe 64 is composed of a metal pipe, and capable of equalizing the pressures of the two closeable spaces S 1, S2 efficiently and in a simplified structure. In FIG. 1, the pressure-equalizing communication pipe 64 has one end communicatably connected to the upper end of the longitudinal center region of the hermetic container 12, and the other end communicatably connected to an upper end of the liquid collection unit 50. The fluid communication between the pressure-equalizing communication pipe 64 and the hermetic container 12, which forms the path R3, may be performed through a communication pipe connection portion 68 provided at an upper end of the hermetic container 12. The communication pipe connection portion 68 is configured such that a connection port thereof is opened downwardly with respect to the hermetic container. Thus, the processed raw material accumulated in the hermetic container 12 is less likely to enter the pressure-equalizing communication pipe 64, so that it becomes possible to prevent the pressure-equalizing communication pipe 64 from being clogged with the processed raw material so as to maintain a communicating state of the pressure-equalizing communication pipe, and thus reliably equalize internal pressures of the hermetic container 12 and the liquid collection unit 50. The pressure-equalizing communication pipe 64 is always in the communicating state, and, when the opening-closing mechanism 60 of the liquid collection flow passage 54 is in a closed state, the hermetic container 12, the liquid collection unit 50 and the liquid collection flow passage 54 are set in a pressure-equalized state. This makes it possible to prevent the processed raw material around the outlet port 16 from forcedly flowing into the liquid inlet 58 due to the pressure difference, even just after opening the opening-closing mechanism 60 of the liquid collection flow passage 54. Further, when collecting the liquid while maintaining the opening-closing mechanism 60 in the open state, the hermetic container 12 and the liquid collection unit 50 are always kept in the pressure-equalized state. Thus, the pressure-equalized state is maintained in the period before the collection through until completion of the collection, so that it become possible to enable only the liquid to be appropriately separated and collected from the outlet port 16 by gravity flow. It should be understood that the pressure equalization device 62 is not limited to this configuration, but may have any other suitable configuration. For example, the pressure equalization device 62 may be provided with an additional high-pressure forming unit for setting the inside of the liquid collection unit to a high pressure, and configured to monitor the internal pressure of the hermetic container by a sensor, and control the high-pressure forming unit based on a signal from the sensor to adjust the internal pressure of the liquid collection unit so as to equalize respective internal pressures of the liquid collection unit and the hermetic container. Alternatively, the internal pressure of the hermetic container may be reduced.

Next, an iron fulvate solution production method according to the first embodiment using the above production apparatus 10 will be described.

The iron fulvate solution production method according to the first embodiment comprises: an apparatus preparation step of preparing the aforementioned processing apparatus; a raw material input step of inputting a raw material from the supply section into the processing space of the hermetic container of the processing apparatus, wherein the raw material comprises a woody plant material and/or a herbaceous plant material formed from a gramineous plant, and an iron material, as main sub-raw materials; a processing step of subjecting the raw material to a subcritical water reaction processing, under stirring, while introducing steam into the processing space in which the raw material is input, to obtain a mixed solution containing iron fulvate, wherein, when the raw material is the woody plant material, the steam is set to have a temperature of 120 to 250°C and a pressure of 0.5 to 3.5 MPa (5 to 35 atm) (more specifically, 1.2 to 2.5 MPa (12 to 25 atm) for a broad-leaved tree, or 2 to 3.5 MPa (20 to 35 atm) for a needle-leaved tree), and when the raw material is the herbaceous plant material, the steam is set to have a temperature of 100 to 200°C and a pressure of 0.2 to 2.5 MPa (2 to 25 atm); and an iron fulvate solution taking-out step of separating the iron fulvate from the obtained mixed solution to take out an iron fulvate solution.

The above steps will be described in detail below.

### « Apparatus Preparation Step »

The production apparatus (processing apparatus) described above with reference to FIG. 1 is prepared.

### « Raw Material Input Step »

### (Woody plant material as main sub-raw material)

Chips which are fragmented pieces of a woody plant material (trunk, branch, leaf or the like) may be used as the main sub-raw material. Preferably, the chip has a long side of about 5 to 150 cm and a short side of about 2 to 5 cm.

Generally, as the woody plant material, it is possible to use a felled timber or wood scrap.

The felled timber may be obtained from a broad-leaved tree or a needle-leaved tree.

While the broad-leaved tree may be any type of broad-leaved tree, it has been verified so far that at least the following broad-leaved trees can be desirably used: white birch (Betula platyphylla), willow (Salicaceae), chestnut tree (Castanea crenata), oak (Quercus), and beech (Fagus crenata).

It has been verified so far that at least the following needle-leaved tree can be desirably used: pine (Pinus), Japanese cedar (Cryptomeria japonica), Japanese cypress (Chamaecyparis obtusa), and Hiba (Thujopsis dolabrata).

When a felled timber is used, it is not necessary to remove bark or the like.

Examples of the wood scrap include wood waste arising from demolition of a wooden building (square log, board: solid wood, laminated wood or plywood (veneer board)). This wood waste is generally formed into chips, so that the resulting wood chips can be directly used as the main sub-raw material.

The above materials may be used in the form of a mixture. For example, when tree felling is performed in general household, various types of felled timbers are generated. These felled timbers may be directly formed into chips in the form of a mixture, without sorting them, to obtain the main sub-raw material. It is to be understood that chips of the wood scrap may be mixed with such wood chips.

### (Herbaceous plant material formed from gramineous plant, as main sub-raw material)

Fragmented pieces of stalk (stem), branch, leaf, etc., of a gramineous plant material formed from a gramineous plant may be used as the main sub-raw material. The length of the fragmented piece is preferably set to 400 mm or less, particularly preferably in the range of 50 to 200 mm. If the length is increased beyond the above upper limit, it becomes difficult to input the fragmented pieces into the processing space, or the fragmented pieces are likely to wind around the stirring member, thereby leading to deterioration in production capability. Even if the length is set to be less than the above lower limit, it poses no problem on the processing for producing iron fulvate. However, it needs to take time and effort for fragmentation.

The herbaceous plant material may be an aging tatami mat.

Examples of the gramineous plant include rice (Oryza sativa), wheat (Triticum aestivum), barley (Hordeum vulgare), oat (Avena fatua), rye (Secale cereale), proso millet (Panicum miliaceum), foxtail millet (Setaria italica), Japanese millet (Echinochloa esculenta), corn (Zea mays), finger millet (Eleusine coracana), sorghum (Sorghum bicolor), bamboo (Bambusoideae), manchurian wild rice (Zizania latifolia), sugar cane (Saccharum officinarum), adlay (Coix lacryma-jobi var. ma-yuen), reed (Phragmites australis), Japanese silver grass (Miscanthus sinensis), arrow bamboo (Pseudosasa japonica), giant reed (Arundo donax), pampas grass (Cortaderia selloana), and lawn grass.

The above plant-based main sub-raw materials may be used in the form of a mixture thereof, wherein a mixing ratio thereof may be arbitrarily set.

### (Iron material as main sub-raw material)

The iron material is preferably made from pure iron, and may be used as the main sub-raw material in the form of at least one of a pellet (or tablet or briquette), a powder, a chip, and a line. When the iron material is formed in a pellet shape, it is preferable to reduce the size thereof as small as possible. However, even a pellet-shaped iron material having a diameter of about 2 mm can be used for production of iron fulvate.

As long as the iron material is an iron oxide (FeO)-based material, it may be used in the form of an iron alloy. For example, it is also possible to use scrap iron. Examples of the scrap iron may include: processing scrap (factory scrap) such as cutlength sheet waste, punching waste, cutting waste, or chips; and used-iron scrap due to decrepitude of steel structures.

Further, as the iron material, it is also possible to use iron oxide (FeO) in an unused disposable body warmer.

### (Auxiliary material or additive)

With a view to efficiently producing a larger amount of fulvic acid, it is possible to add an alkaline solution, as an auxiliary material or additive. The pressure and temperature of the steam in the case of adding an alkaline solution may be the same as those in the case of adding no alkaline solution.

The aforementioned woody or herbaceous plant material in the form of chips or fragmented pieces as one main sub-raw material is input into the processing space. In this process, this main sub-raw material is preferably input in an amount of 90% or less, particularly preferably in an amount of 50 to 80%, of the processing space, i.e., the closable space S1 of the hermetic container 12. If the input amount of the main sub-raw material is less than the above lower limit, it leads to poor processing efficiency. On the other hand, if the input amount is greater than the above upper limit, there is a possibility that steam fails to adequately act on the raw material, resulting in insufficient production of fulvic acid. During input of this main sub-raw material, the iron material as another main sub-raw material is simultaneously input, preferably, in an amount of about 1 kg (which is excess in terms of a reactant) when the volume of the processing space is 2 m3.

### « Processing Step »

In this step, steam is introduced into the processing space in which the raw material is input. When the raw material comprises the woody plant material and the iron material, the steam is set to have a temperature of 120 to 250°C and a pressure of 0.5 to 3.5 MPa (5 to 35 atm) (more specifically, 0.5 to 2.5 MPa (5 to 25 atm) for a broad-leaved tree, or 2 to 3.5 MPa (20 to 35 atm) for a needle-leaved tree), or to have a temperature of 100 to 200°C and a pressure of 0.2 to 2.5 MPa (2 to 25 atm) when the raw material comprises the herbaceous plant material and the iron material. When the raw material is in the form of a mixture, the temperature and pressure may be set according to the mixing ratio thereof. Although a preferred volume of steam to be introduced varies depending on the volume of the processing space and the volume of the raw material to be processed, it is preferably set to allow a remaining space (value obtained by subtracting the volume of the input raw material from the volume of the processing space) to be fully filled therewith.

In this processing step, steam is introduced into the processing space in which the raw material is input, and, in this state, the raw material is subjected to processing based on a subcritical water reaction, under stirring, as mentioned above.

Preferably, the processing step is performed for 30 minutes to 3 hours when the raw material comprises the woody plant material and the iron material, or for 30 minute to 10 hours when the raw material comprises the herbaceous plant material and the iron material. If the processing time is less than the above lower limit, a reaction time becomes insufficient, i.e., the production of fulvic acid becomes insufficient and thereby the production of iron fulvate also becomes insufficient. On the other hand, if the processing time is greater than the above upper limit, fulvic acid changes to humic acid, resulting in reduced amount of production of iron fulvate, or the woody or herbaceous plant material in the raw material is undesirably carbonized.

A preferred internal temperature and pressure of the processing space during the processing step vary depending on the type and state of the raw material to be used. Specifically, the processing space during the processing step is maintained at a pressure of 120 to 250°C and a pressure of 0.5 to 3.5 MPa (5 to 35 atm) when the raw material comprises the woody plant material and the iron material, or at a pressure of 100 to 200°C and a pressure of 0.2 to 2.5 MPa (2 to 25 atm) when the raw material comprises the herbaceous plant material and the iron material,

Through the processing step, the raw material is subjected to the subcritical water reaction processing, to obtain a solution containing fulvic acid, iron fulvate and humic acid. That is, a mixed solution containing fulvic acid, iron fulvate, humic acid, suspended matter of the woody or herbaceous plant material and fragments thereof, and a residue of iron is obtained.

In the mixed solution obtained in the processing step, with respect to the total amount (solid content) of fulvic acid, iron fulvate and humic acid, the iron fulvate is contained in an amount of 3 to 12% when one of the main sub-raw materials is the woody plant material, or in an amount of 2 to 10% when one of the main sub-raw materials is the herbaceous plant material.

### « Cooling Step »

After completion of the processing step, a cooling step may be performed. In this cooling step, the processing space is cooled, i.e., the steam in the processing space is cooled to obtain a solution containing iron fulvate, fulvic acid and humic acid. Typically, this cooling is performed by natural cooling.

### « Iron Fulvate Solution Taking-Out Step »

In the iron fulvate solution taking-out step, humic acid and iron fulvate are individually separated from the mixed solution obtained in the precedent step (the processing step or a combination of the processing step and the cooling step), to take out an iron fulvate solution.

A method of separating humic acid and iron fulvate in the iron fulvate solution taking-out step comprises adjusting the mixed solution to exhibit an acidic pH to cause humic acid to be separately precipitated, and subjecting the resulting solution to filtering. The pH value of the mixed solution is preferably set to 2 to 3.

### [Examples]

First of all, a processing apparatus having the structure as shown in FIG. 1 was prepared, wherein the volume of the processing space in the hermetic container was 2 m³.

An experimental test of production of an iron fulvate solution was conducted by using, as the raw material, chips of a felled timber of white birch and a pellet-shaped iron material having an average particle size of 1.0 mm (Example 1) and chips of a felled timber of willow and a pellet-shaped iron material having an average particle size of 1.0 mm (Example 2), and inputting each of the raw materials into the processing space. In each of Examples 1 and 2, the woody plant material had a long side of about 10 cm on average. In each of Examples 1 and 2, an input amount of the chips of the woody plant material was set to 1.6 m³ (80% of the volume of the processing space). Further, in each of Examples 1 and 2, an input amount of the iron material was set to 1 kg.

After input of the raw material, the raw material in each of Examples 1 and 2 was subjected to a subcritical water reaction processing, under stirring by a stirring device, while introducing steam having a temperature of 200°C and a pressure of 2 MPa (20 atm) into the processing space. In each of Examples 1 and 2, a processing time was set to 1 hour.

In a holding period in the processing step, the processing space during the processing step was kept at a temperature of 200°C and a pressure of 2 MPa (20 atm).

After completion of the processing, the processing space was communicated with atmospheric air to set the processing space to atmospheric pressure. Subsequently, only a mixed solution was extracted from the processing apparatus.

Subsequently, the mixed solution in each of Examples 1 and 2 was analyzed in the following manner to check the presence of ion fulvate, and others.
1) First of all, the mixed solution was filtered by a membrane filter (pore size of 0.45 µm), and the resulting filtrate was subjected to fulvic acid analysis by three-dimensional fluorescence spectrophotometry.
2) Then, 100 ml of the filtrate was supplied to flow through a column with an infill of anion-exchange resin, at a speed of less than 5 ml/min. After cleaning the inside of the column by distillated water, an iron complex was eluted using 40 ml of 1M hydrochloric acid, and quantitatively analyzed by ICP emission spectroscopy.

As above, fulvic acid was measured in the former analysis, and iron bound to fulvic acid was measured in the latter analysis to check respective concentrations of the fulvic acid and the iron. As a result, it was ascertained that ion fulvate was successively produced.

This evidently proves an advantageous effect of the present invention.

Further, except that pine and Japanese cedar as needle-leaved trees were used as the woody plant material, and the processing temperature and pressure were set to higher values than those in the case of broad-leaved trees, an experimental test was conducted under the same conditions as those described above. As a result, a larger amount of ion fulvate could be obtained, as compared to the case of broad-leaved trees.

Further, an experimental test of production of an iron fulvate solution was conducted by using, as the raw material, fragmented pieces of rice straw and a pellet-shaped iron material having an average particle size of 1.0 mm (Example 3) and fragmented pieces of bamboo and a pellet-shaped iron material having an average particle size of 1.0 mm (Example 4), and inputting each of the raw materials into the processing space. In each of Examples 3 and 4, the fragmented piece had a long side of about 10 cm on average. In each of Examples 3 and 4, an input amount of the fragmented pieces was set to 1.6 m³ (80% of the volume of the processing space). Further, in each of Examples 3 and 4, an input amount of the iron material was set to 1 kg. Each of the rice straw and the bamboo was used after drying. Thus, a moderate amount of water was introduced together with the raw material.

After input of the raw material, the raw material was subjected to a steam-based subcritical water reaction processing, under stirring by a stirring device, while introducing, into the processing space, steam having a temperature of 180°C and a pressure of 0.7 MPa (7 atm) in the case of using rice straw and the iron material as main sub-raw materials, or steam having a temperature of 180°C and a pressure of 1.2 MPa (12 atm) in the case of using bamboo and the iron material as main sub-raw materials. The processing time was set to 30 minutes in the case of using rice straw as one of the main sub-raw materials, or to 60 minutes in the case of using bamboo as one of the main sub-raw materials.

In a holding period in the processing step, the processing space during the processing step was kept at a temperature of 180°C and a pressure of 0.7 MPa (7 atm) in the case of rice straw, or at a temperature of 180°C and a pressure of 12 atm in the case of bamboo.

After completion of the processing, the processing space was communicated with atmospheric air to set the processing space to atmospheric pressure. Subsequently, only a mixed solution was extracted from the processing apparatus.

This mixed solution was processed in the same manner as that in the case of the woody plant material, and then analyzed in the same manner as that in Examples 1 and 2.

As with the case where the woody plant material is used as one of the main sub-raw materials, it was ascertained that ion fulvate was successively produced.

This evidently proves an advantageous effect of the present invention.

Next, an iron hydroxide fulvate solution production method according to the second embodiment will be described. The aforementioned production apparatus 10 is used as a production apparatus for implementing this method. Therefore, description of the production apparatus itself will be omitted here.

The iron hydroxide fulvate solution production method according to the second embodiment comprises: an apparatus preparation step of preparing the aforementioned processing apparatus; a raw material input step of inputting a raw material from the supply section into the processing space of the hermetic container of the processing apparatus, wherein the raw material comprises a woody plant material and/or a herbaceous plant material formed from a gramineous plant, and iron hydroxide, as main sub-raw materials; a processing step of subjecting the raw material to a subcritical water reaction processing, under stirring, while introducing steam into the processing space in which the raw material is input, to obtain a mixed solution containing iron hydroxide fulvate, wherein, when the raw material is the woody plant material, the steam is set to have a temperature of 120 to 250°C and a pressure of 0.5 to 3.5 MPa (5 to 35 atm) (more specifically, 0.5 to 2.5 MPa (5 to 25 atm) for a broad-leaved tree, or 2 to 3.5 MPa (20 to 35 atm) for a needle-leaved tree), and when the raw material is the herbaceous plant material, the steam is set to have a temperature of 100 to 200°C and a pressure of 0.2 to 2.5 MPa (2 to 25 atm), and an iron hydroxide fulvate solution taking-out step of separating the iron hydroxide fulvate from the obtained mixed solution to take out an iron hydroxide fulvate solution.

The above steps will be described in detail below.

### « Apparatus Preparation Step »

The production apparatus (processing apparatus) described above with reference to FIG. 1 is prepared.

### « Raw Material Input Step »

### (Woody plant material as main sub-raw material)

On this matter, the same as that in the first embodiment may be applied, and therefore duplicated description will be omitted here.

### (Herbaceous plant material formed from gramineous plant, as main sub-raw material)

On this matter, the same as that in the first embodiment may be applied, and therefore duplicated description will be omitted here.

### (Iron hydroxide as main sub-raw material)

The iron hydroxide is used in the form of solution. From a standpoint of preventing progress of oxidation of the iron hydroxide, it is important that oxygen in steam to be injected into the hermetic container is preliminarily removed. It is known that high-temperature steam generally releases oxygen.

### (Auxiliary material or additive)

On this matter, the same as that in the first embodiment may be applied, and therefore duplicated description will be omitted here.

The aforementioned woody or herbaceous plant material in the form of chips or fragmented pieces as one main sub-raw material is input into the processing space. In this process, this main sub-raw material is preferably input in an amount of 90% or less, particularly preferably in an amount of 50 to 80%, of the processing space, i.e., the closable space S1 of the hermetic container 12. If the input amount of the main sub-raw material is less than the above lower limit, it leads to poor processing efficiency. On the other hand, if the input amount is greater than the above upper limit, there is a possibility that steam fails to adequately act on the raw material, resulting in insufficient production of iron hydroxide fulvate. During input of this main sub-raw material, iron hydroxide as another main sub-raw material is simultaneously input in the form of solution, preferably, in an amount of about 1 to 3 kg in terms of pure iron (34 to 102 kg in the form of solution) (in a sufficient amount as a reactant) when the volume of the processing space is 2 m³.

### « Processing Step »

In this step, steam is introduced into the processing space in which the raw material is input. When the raw material comprises the woody plant material and iron hydroxide, the steam is set to have a temperature of 120 to 250°C and a pressure of 0.5 to 3.5 MPa (5 to 35 atm) (more specifically, 0.5 to 2.5 MPa (5 to 25 atm) for a broad-leaved tree, or 2 to 3.5 MPa (20 to 35 atm) for a needle-leaved tree), or to have a temperature of 100 to 200°C and a pressure of 0.2 to 2.5 MPa (2 to 25 atm) when the raw material comprises the herbaceous plant and iron hydroxide. When the raw material is in the form of a mixture, the temperature and pressure may be set according to the mixing ratio thereof. Although a preferred volume of steam to be introduced varies depending on the volume of the processing space and the volume of the raw material to be processed, it is preferably set to allow a remaining space (value obtained by subtracting the volume of the input raw material from the volume of the processing space) to be fully filled therewith.

In this processing step, steam is introduced into the processing space in which the raw material is input, and, in this state, the raw material is subjected to processing based on a subcritical water reaction, under stirring, as mentioned above.

Preferably, the processing step is performed for 30 minutes to 12 hours when the raw material comprises the woody plant material and iron hydroxide, or for 30 minute to 10 hours when the raw material comprises the herbaceous plant material and iron hydroxide. If the processing time is less than the above lower limit, a reaction time becomes insufficient, i.e., the production of fulvic acid becomes insufficient and thereby the production of iron hydroxide fulvate also becomes insufficient. On the other hand, if the processing time is greater than the above upper limit, fulvic acid changes to humic acid, resulting in reduced amount of production of iron hydroxide fulvate, or the woody or herbaceous plant material in the raw material is undesirably carbonized.

A preferred internal temperature and pressure of the processing space during the processing step vary depending on the type and state of the raw material to be used. Specifically, the processing space during the processing step is maintained at a pressure of 120 to 250°C and a pressure of 0.5 to 3.5 MPa (5 to 35 atm) when the raw material comprises the woody plant material and iron hydroxide, or at a pressure of 100 to 200°C and a pressure of 0.2 to 2.5 MPa (2 to 25 atm) when the raw material comprises the herbaceous plant material and iron hydroxide.

Through the processing step, the raw material is subjected to the subcritical water reaction processing, to obtain a solution containing fulvic acid, iron hydroxide fulvate and humic acid. That is, a mixed solution containing fulvic acid, iron hydroxide fulvate, humic acid, and suspended matter of the woody or herbaceous plant material and fragments thereof is obtained.

In the mixed solution obtained in the processing step, with respect to the total amount (solid content) of iron hydroxide fulvate and humic acid, the iron hydroxide fulvate is contained in an amount of 3 to 12% when one of the main sub-raw materials is the woody plant material, or in an amount of 2 to 10% when one of the main sub-raw materials is the herbaceous plant material.

### « Cooling Step »

After completion of the processing step, a cooling step may be performed. In this cooling step, the processing space is cooled, i.e., the steam in the processing space is cooled to obtain a solution containing fulvic acid, iron hydroxide fulvate and humic acid. Typically, this cooling is performed by natural cooling.

### << Iron Hydroxide Fulvate Solution Taking-Out Step >>

In the iron hydroxide fulvate solution taking-out step, a solution part is separated from a solid part. For example, this separation is performed by causing the solution part to free-fall while allowing the solid part to remain in the hermetic container. This residue solid is composed of wood chips or the like to which no iron adheres because iron is water-soluble, so that it can be used as feed for cows or the like. On the other hand, humic acid, iron hydroxide fulvate and fulvic acid are individually separated from the separated mixed solution to take out an iron hydroxide fulvate solution. A method of separating humic acid and iron hydroxide fulvate in the iron hydroxide fulvate solution taking-out step comprises adjusting the mixed solution to exhibit an acidic pH to cause humic acid to be separately precipitated, and subjecting the resulting solution to filtering. The pH value of the mixed solution is preferably set to 2 to 3.

### [Examples]

First of all, a processing apparatus having the structure as shown in FIG. 1 was prepared, wherein the volume of the processing space in the hermetic container was 2 m³.

An experimental test of production of an iron hydroxide fulvate solution was conducted by using, as the raw material, chips of a felled timber of white birch and an iron hydroxide solution (Example 1) and chips of a felled timber of willow and an iron hydroxide solution (Example 2), and inputting each of the raw materials into the processing space. In each of Examples 1 and 2, the woody plant material had a long side of about 10 cm on average. In each of Examples 1 and 2, an input amount of the chips of the woody plant material was set to 1.6 m³ (80% of the volume of the processing space). Further, in each of Examples 1 and 2, an input amount of the iron hydroxide solution was set to 34 kg (1 kg in terms of pure iron).

After input of the raw material, the raw material in each of Examples 1 and 2 was subjected to a subcritical water reaction processing, under stirring by a stirring device, while introducing steam having a temperature of 200°C and a pressure of 2 MPa (20 atm) into the processing space. In each of Examples 1 and 2, a processing time was set to 1 hour.

In a holding period in the processing step, the processing space during the processing step was kept at a temperature of 200°C and a pressure of 2 MPa (20 atm).

After completion of the processing, the processing space was communicated with atmospheric air to set the processing space to atmospheric pressure. Subsequently, only a mixed solution was extracted from the processing apparatus.

Subsequently, the mixed solution in each of Examples 1 and 2 was analyzed in the following manner to check the presence of iron hydroxide fulvate, and others.
1) First of all, the mixed solution was filtered by a membrane filter (pore size of 0.45 µm), and the resulting filtrate was subjected to fulvic acid analysis by three-dimensional fluorescence spectrophotometry.
2) Then, 100 ml of the filtrate was supplied to flow through a column with an infill of anion-exchange resin, at a speed of less than 5 ml/min. After cleaning the inside of the column by distillated water, an iron complex was eluted using 40 ml of 1M hydrochloric acid, and quantitatively analyzed by ICP emission spectroscopy.

As above, fulvic acid was measured in the former analysis, and iron bound to fulvic acid was measured in the latter analysis to check respective concentrations of the fulvic acid and the iron. As a result, it was ascertained that iron hydroxide fulvate was successively produced.

This evidently proves an advantageous effect of the present invention.

Further, except that pine and Japanese cedar as needle-leaved trees were used as the woody plant material, and the processing temperature and pressure were set to higher values than those in the case of broad-leaved trees, an experimental test was conducted under the same conditions as those described above. As a result, a larger amount of iron hydroxide fulvate could be obtained, as compared to the case of broad-leaved trees.

Further, an experimental test of production of an iron hydroxide fulvate solution was conducted by using, as the raw material, fragmented pieces of rice straw and an iron hydroxide solution (Example 3) and fragmented pieces of bamboo and an iron hydroxide solution (Example 4), and inputting each of the raw materials into the processing space. In each of Examples 3 and 4, the fragmented piece had a long side of about 10 cm on average. In each of Examples 3 and 4, an input amount of the fragmented pieces was set to 1.6 m³ (80% of the volume of the processing space). Further, in each of Examples 3 and 4, an input amount of iron hydroxide was set to 1 kg (input 10 kg in the form of solution). Each of the rice straw and the bamboo was used after drying. Thus, a moderate amount of water was introduced together with the raw material.

After input of the raw material, the raw material was subjected to a steam-based subcritical water reaction processing, under stirring by a stirring device, while introducing, into the processing space, steam having a temperature of 180°C and a pressure of 0.7 MPa (7 atm) in the case of using rice straw and iron hydroxide as main sub-raw materials, or steam having a temperature of 180°C and a pressure of 1.2 MPa (12 atm) in the case of using bamboo and iron hydroxide as main sub-raw materials. The processing time was set to 30 minutes in the case of using rice straw as one of the main sub-raw materials, or to 60 minutes in the case of using bamboo as one of the main sub-raw materials.

In a holding period in the processing step, the processing space during the processing step was kept at a temperature of 180°C and a pressure of 0.7 MPa (7 atm) in the case of rice straw, or at a temperature of 180°C and a pressure of 1.2 MPa (12 atm) in the case of bamboo.

After completion of the processing, the processing space was communicated with atmospheric air to set the processing space to atmospheric pressure. Subsequently, only a mixed solution was extracted from the processing apparatus.

This mixed solution was processed in the same manner as that in the case of the woody plant material, and then analyzed in the same manner as that in Examples 1 and 2.

As with the case where the woody plant material is used as one of the main sub-raw materials, it was ascertained that iron hydroxide fulvate was successively produced.

This evidently proves an advantageous effect of the present invention.

Next, a polysilica-iron fulvate solution production method according to the third embodiment will be described. The aforementioned production apparatus 10 is used as a production apparatus for implementing this method. Therefore, description of the production apparatus itself will be omitted here.

The polysilica-iron fulvate solution production method according to the third embodiment comprises: an apparatus preparation step of preparing the aforementioned processing apparatus; a raw material input step of inputting a raw material from the supply section into the processing space of the hermetic container of the processing apparatus, wherein the raw material comprises a woody plant material and/or a herbaceous plant material formed from a gramineous plant, and polysilica iron, as main sub-raw materials; a processing step of subjecting the raw material to a subcritical water reaction processing, under stirring, while introducing steam into the processing space in which the raw material is input, to obtain a mixed solution containing polysilica-iron fulvate, wherein, when the raw material is the woody plant material, the steam is set to have a temperature of 120 to 250°C and a pressure of 0.5 to 3.5 MPa (5 to 35 atm) (more specifically, 0.5 to 2.5 MPa (5 to 25 atm) for a broad-leaved tree, or 2 to 3.5 MPa (20 to 35 atm) for a needle-leaved tree), and when the raw material is the herbaceous plant material, the steam is set to have a temperature of 100 to 200°C and a pressure of 2 to 25 atm; and a polysilica-iron fulvate solution taking-out step of separating the polysilica-iron fulvate from the obtained mixed solution to take out a polysilica-iron fulvate solution.

The above steps will be described in detail below.

### « Apparatus Preparation Step »

The production apparatus (processing apparatus) described above with reference to FIG. 1 is prepared.

### « Raw Material Input Step »

### (Woody plant material as main sub-raw material)

On this matter, the same as that in the first embodiment may be applied, and therefore duplicated description will be omitted here.

### (Herbaceous plant material formed from gramineous plant, as main sub-raw material)

On this matter, the same as that in the first embodiment may be applied, and therefore duplicated description will be omitted here.

### (Polysilica iron as main sub-raw material)

The polysilica iron is used in the form of solution. From a standpoint of preventing progress of oxidation of the polysilica iron, it is important that oxygen in steam to be injected into the hermetic container is preliminarily removed. It is known that high-temperature steam generally releases oxygen.

### (Auxiliary material or additive)

On this matter, the same as that in the first embodiment may be applied, and therefore duplicated description will be omitted here.

The aforementioned woody or herbaceous plant material in the form of chips or fragmented pieces as one main sub-raw material is input into the processing space. In this process, this main sub-raw material is preferably input in an amount of 90% or less, particularly preferably in an amount of 50 to 80%, of the processing space, i.e., the closable space S1 of the hermetic container 12. If the input amount of the main sub-raw material is less than the above lower limit, it leads to poor processing efficiency. On the other hand, if the input amount is greater than the above upper limit, there is a possibility that steam fails to adequately act on the raw material, resulting in insufficient production of polysilica-iron fulvate. During input of this main sub-raw material, polysilica iron as another main sub-raw material is simultaneously input in the form of solution, preferably, in an amount of about 10 to 30 kg (in a sufficient amount as a reactant; because a ratio of silica/iron is, e.g., 1.0% when an aggregating agent PSI-100 manufactured by Naoji Yakuhin Co., Ltd is used) in the processing space having a volume of 2 m³.

### « Processing Step »

In this step, steam is introduced into the processing space in which the raw material is input. When the raw material comprises the woody plant material and polysilica iron, the steam is set to have a temperature of 120 to 250°C and a pressure of 0.5 to 3.5 MPa (5 to 35 atm) (more specifically, 0.5 to 2.5 MPa (5 to 25 atm) for a broad-leaved tree, or 2 to 3.5 MPa (20 to 35 atm) for a needle-leaved tree), or to have a temperature of 100 to 200°C and a pressure of 0.2 to 2.5 MPa (2 to 25 atm) when the raw material comprises the herbaceous plant and polysilica iron. When the raw material is in the form of a mixture, the temperature and pressure may be set according to the mixing ratio thereof. Although a preferred volume of steam to be introduced varies depending on the volume of the processing space and the volume of the raw material to be processed, it is preferably set to allow a remaining space (value obtained by subtracting the volume of the input raw material from the volume of the processing space) to be fully filled therewith.

In this processing step, steam is introduced into the processing space in which the raw material is input, and, in this state, the raw material is subjected to processing based on a subcritical water reaction, under stirring, as mentioned above.

Preferably, the processing step is performed for 30 minutes to 12 hours when the raw material comprises the woody plant material and polysilica iron, or for 30 minute to 10 hours when the raw material comprises the herbaceous plant material and polysilica iron. If the processing time is less than the above lower limit, a reaction time becomes insufficient, i.e., the production of fulvic acid becomes insufficient and thereby the production of polysilica-iron fulvate also becomes insufficient. On the other hand, if the processing time is greater than the above upper limit, fulvic acid changes to humic acid, resulting in reduced amount of production of polysilica-iron fulvate, or the woody or herbaceous plant material in the raw material is undesirably carbonized.

A preferred internal temperature and pressure of the processing space during the processing step vary depending on the type and state of the raw material to be used. Specifically, the processing space during the processing step is maintained at a pressure of 120 to 250°C and a pressure of 1.2 to 3.5 MPa (12 to 35 atm) when the raw material comprises the woody plant material and polysilica iron, or at a pressure of 100 to 200°C and a pressure of 0.2 to 2.5 MPa (2 to 25 atm) when the raw material comprises the herbaceous plant material and polysilica iron.

Through the processing step, the raw material is subjected to the subcritical water reaction processing, to obtain a solution containing fulvic acid, polysilica-iron fulvate, humic acid and polymerized silicic acid. That is, a mixed solution containing fulvic acid, polysilica-iron fulvate, humic acid, suspended matter of the woody or herbaceous plant material and fragments thereof, and a precipitate of polymerized silicic acid, is obtained.

In the mixed solution obtained in the processing step, with respect to the total amount (solid content) of polysilica-iron fulvate and humic acid, the polysilica-iron fulvate is contained in an amount of 3 to 12% when one of the main sub-raw materials is the woody plant material, or in an amount of 2 to 10% when one of the main sub-raw materials is the herbaceous plant material.

### « Cooling Step »

After completion of the processing step, a cooling step may be performed. In this cooling step, the processing space is cooled, i.e., the steam in the processing space is cooled to obtain a solution containing fulvic acid, polysilica-iron fulvate and humic acid. Typically, this cooling is performed by natural cooling.

### « Polysilica-iron Fulvate Solution Taking-Out Step »

In the polysilica-iron fulvate solution taking-out step, a solution part is separated from a solid part. For example, this separation is performed by causing the solution part to free-fall while allowing the solid part to remain in the hermetic container. This residue solid is composed of wood chips or the like to which polysilica adheres. On the other hand, humic acid, polysilica-iron fulvate and fulvic acid are individually separated from the separated mixed solution to take out a polysilica-iron fulvate solution. A method of separating humic acid and polysilica-iron fulvate in the polysilica-iron fulvate solution taking-out step comprises adjusting the mixed solution to exhibit an acidic pH to cause humic acid to be separately precipitated, and subjecting the resulting solution to filtering. The pH value of the mixed solution is preferably set to 2 to 3.

### [Examples]

First of all, a processing apparatus having the structure as shown in FIG. 1 was prepared, wherein the volume of the processing space in the hermetic container was 2 m³.

An experimental test of production of a polysilica-iron fulvate solution was conducted by using, as the raw material, chips of a felled timber of white birch and a polysilica iron solution (Example 1) and chips of a felled timber of willow and a polysilica iron solution (Example 2), and inputting each of the raw materials into the processing space. In each of Examples 1 and 2, the woody plant material had a long side of about 10 cm on average. In each of Examples 1 and 2, an input amount of the chips of the woody plant material was set to 1.6 m³ (80% of the volume of the processing space). Further, in each of Examples 1 and 2, an input amount of the polysilica iron solution was set to 1 kg.

After input of the raw material, the raw material in each of Examples 1 and 2 was subjected to a subcritical water reaction processing, under stirring by a stirring device, while introducing steam having a temperature of 200°C and a pressure of 2 MPa (20 atm) into the processing space. In each of Examples 1 and 2, a processing time was set to 1 hour.

In a holding period in the processing step, the processing space during the processing step was kept at a temperature of 200°C and a pressure of 2 MPa (20 atm).

After completion of the processing, the processing space was communicated with atmospheric air to set the processing space to atmospheric pressure. Subsequently, only a mixed solution was extracted from the processing apparatus.

Subsequently, the mixed solution in each of Examples 1 and 2 was analyzed in the following manner to check the presence of polysilica-iron fulvate, and others. First of all, the mixed solution was filtered by a membrane filter (pore size of 0.45 µm), and the resulting filtrate was subjected to fulvic acid analysis by three-dimensional fluorescence spectrophotometry. Then, 100 ml of the filtrate was supplied to flow through a column with an infill of anion-exchange resin, at a speed of less than 5 ml/min. After cleaning the inside of the column by distillated water, an iron complex was eluted using 40 ml of 1M hydrochloric acid, and iron and silica were quantitatively analyzed by ICP emission spectroscopy.

As above, fulvic acid was measured in the former analysis, and iron and silica bound to fulvic acid was measured in the latter analysis to check respective concentrations of the fulvic acid, the iron and the silica. As a result, it was ascertained that polysilica-iron fulvate was successively produced.

This evidently proves an advantageous effect of the present invention.

Further, except that pine and Japanese cedar as needle-leaved trees were used as the woody plant material, and the processing temperature and pressure were set to higher values than those in the case of broad-leaved trees, an experimental test was conducted under the same conditions as those described above. As a result, a larger amount of polysilica-iron fulvate could be obtained, as compared to the case of broad-leaved trees.

Further, an experimental test of production of a polysilica-iron fulvate solution was conducted by using, as the raw material, fragmented pieces of rice straw and a polysilica iron solution (Example 3) and fragmented pieces of bamboo and a polysilica iron solution (Example 4), and inputting each of the raw materials into the processing space. In each of Examples 3 and 4, the fragmented piece had a long side of about 10 cm on average. In each of Examples 3 and 4, an input amount of the fragmented pieces was set to 1.6 m³ (80% of the volume of the processing space). Further, in each of Examples 3 and 4, an input amount of polysilica iron was set to 1 kg. Each of the rice straw and the bamboo was used after drying. Thus, a moderate amount of water was introduced together with the raw material.

After input of the raw material, the raw material was subjected to a steam-based subcritical water reaction processing, under stirring by a stirring device, while introducing, into the processing space, steam having a temperature of 180°C and a pressure of 0.7 MPa (7 atm) in the case of using rice straw and polysilica iron as main sub-raw materials, or steam having a temperature of 180°C and a pressure of 1.2 MPa (12 atm) in the case of using bamboo and polysilica iron as main sub-raw materials. The processing time was set to 30 minutes in the case of using rice straw as one of the main sub-raw materials, or to 60 minutes in the case of using bamboo as one of the main sub-raw materials.

In a holding period in the processing step, the processing space during the processing step was kept at a temperature of 180°C and a pressure of 0.7 MPa (7 atm) in the case of rice straw, or at a temperature of 180°C and a pressure of 1.2 MPa (12 atm) in the case of bamboo.

After completion of the processing, the processing space was communicated with atmospheric air to set the processing space to atmospheric pressure. Subsequently, only a mixed solution was extracted from the processing apparatus.

This mixed solution was processed in the same manner as that in the case of the woody plant material, and then analyzed in the same manner as that in Examples 1 and 2.

As with the case where the woody plant material is used as one of the main sub-raw materials, it was ascertained that polysilica-iron fulvate was successively produced.

This evidently proves an advantageous effect of the present invention.

### LIST OF REFERENCE SIGNS

10: organic waste processing apparatus
12: hermetic container
14: steam jetting device
16: outlet port
18: separation-collection device
26: opening-closing mechanism
30: stirring device
50: liquid collection unit
52: gravity flow-based collection mechanism
54: liquid collection flow passage
58: liquid inlet
60: opening-closing mechanism
62: pressure equalization device
64: pressure-equalizing communication pipe

## Claims

1. An iron fulvate solution production method comprising:
an apparatus preparation step of preparing a processing apparatus which comprises: a hermetic container internally having a closeable processing space; a steam jetting device operable to jet high-temperature and high-pressure steam into the hermetic container; a supply section for supplying a raw material into the hermetic container; and a discharge section for discharging, to the outside, a processed liquid produced through processing of the raw material by the steam;
a raw material input step of inputting a raw material from the supply section into the processing space of the hermetic container of the processing apparatus, wherein the raw material comprises a woody plant material and an iron material, as main sub-raw materials;
a processing step of subjecting the raw material to a subcritical water reaction processing, under stirring, while introducing steam having a temperature of 120 to 250°C and a pressure of 0.5 MPa (5 atm) to 3.5
MPa (35 atm) into the processing space in which the raw material is input, to obtain a mixed solution containing iron fulvate; and
an iron fulvate solution taking-out step of separating the iron fulvate from the obtained mixed solution to take out an iron fulvate solution.

2. An iron fulvate solution production method comprising:
an apparatus preparation step of preparing a processing apparatus which comprises: a hermetic container internally having a closeable processing space; a steam jetting device operable to jet high-temperature and high-pressure steam into the hermetic container; a supply section for supplying a raw material into the hermetic container; and a discharge section for discharging, to the outside, a processed liquid produced through processing of the raw material by the steam;
a raw material input step of inputting a raw material from the supply section into the processing space of the hermetic container of the processing apparatus, wherein the raw material comprises a herbaceous plant material formed from a gramineous plant, and an iron material, as main sub-raw materials;
a processing step of subjecting the raw material to a subcritical water reaction processing, under stirring, while introducing steam having a temperature of 100 to 200°C and a pressure of 0.2 MPa (2 atm) to 2.5 MPa (25 atm) into the processing space in which the raw material is input, to obtain a mixed solution containing iron fulvate; and
an iron fulvate solution taking-out step of separating the iron fulvate from the obtained mixed solution to take out an iron fulvate solution.

3. An iron hydroxide fulvate solution production method comprising:
an apparatus preparation step of preparing a processing apparatus which comprises: a hermetic container internally having a closeable processing space; a steam jetting device operable to jet high-temperature and high-pressure steam into the hermetic container; a supply section for supplying a raw material into the hermetic container; and a discharge section for discharging, to the outside, a processed liquid produced through processing of the raw material by the steam;
a raw material input step of inputting a raw material from the supply section into the processing space of the hermetic container of the processing apparatus, wherein the raw material comprises a woody plant material and iron hydroxide, as main sub-raw materials;
a processing step of subjecting the raw material to a subcritical water reaction processing, under stirring, while introducing steam having a temperature of 120 to 250°C and a pressure of 0.5 MPa (5 atm) to 3.5 MPa (35 atm) into the processing space in which the raw material is input, to obtain a mixed solution containing iron hydroxide fulvate; and
an iron hydroxide fulvate solution taking-out step of separating the iron hydroxide fulvate from the obtained mixed solution to take out an iron hydroxide fulvate solution.

4. An iron hydroxide fulvate solution production method as recited in claim 3, further comprising a solid residue taking-out step of separating the solid residue obtained in the processing step, from the mixed solution to take out the solid residue; wherein
said iron hydroxide fulvate solution taking-out step is proceeded after said solid residue taking-out step.

5. An iron hydroxide fulvate solution production method comprising:
an apparatus preparation step of preparing a processing apparatus which comprises: a hermetic container internally having a closeable processing space; a steam jetting device operable to jet high-temperature and high-pressure steam into the hermetic container; a supply section for supplying a raw material into the hermetic container; and a discharge section for discharging, to the outside, a processed liquid produced through processing of the raw material by the steam;
a raw material input step of inputting a raw material from the supply section into the processing space of the hermetic container of the processing apparatus, wherein the raw material comprises a herbaceous plant material formed from a gramineous plant, and iron hydroxide, as main sub-raw materials;
a processing step of subjecting the raw material to a subcritical water reaction processing, under stirring, while introducing steam having a temperature of 100 to 200°C and a pressure of 0.2 MPa (2 atm) to 2.5 MPa (25 atm) into the processing space in which the raw material is input, to obtain a mixed solution containing iron hydroxide fulvate; and
an iron hydroxide fulvate solution taking-out step of separating the iron hydroxide fulvate from the obtained mixed solution to take out an iron hydroxide fulvate solution.

6. An iron hydroxide fulvate solution production method as recited in claim 5, further comprising a solid residue taking-out step of separating the solid residue obtained in the processing step, from the mixed solution to take out the solid residue; wherein
said iron hydroxide fulvate solution taking-out step is proceeded after said solid residue taking-out step.

7. A polysilica-iron fulvate solution production method comprising:
an apparatus preparation step of preparing a processing apparatus which comprises: a hermetic container internally having a closeable processing space; a steam jetting device operable to jet high-temperature and high-pressure steam into the hermetic container; a supply section for supplying a raw material into the hermetic container; and a discharge section for discharging, to the outside, a processed liquid produced through processing of the raw material by the steam;
a raw material input step of inputting a raw material from the supply section into the processing space of the hermetic container of the processing apparatus, wherein the raw material comprises a woody plant material and polysilica iron, as main sub-raw materials;
a processing step of subjecting the raw material to a subcritical water reaction processing, under stirring, while introducing steam having a temperature of 120 to 250°C and a pressure of 0.5 MPa (5 atm) to 3.5 MPa (35 atm) into the processing space in which the raw material is input, to obtain a mixed solution containing polysilica-iron fulvate; and
a polysilica-iron fulvate solution taking-out step of separating the polysilica-iron fulvate from the obtained mixed solution to take out a polysilica-iron fulvate solution.

8. A polysilica-iron fulvate solution production method as recited in claim 7, further comprising a solid residue taking-out step of separating the solid residue obtained in the processing step, from the mixed solution to take out the solid residue; wherein
said polysilica-iron fulvate solution taking-out step is proceeded after said solid residue taking-out step.

9. A polysilica-iron fulvate solution production method comprising:
an apparatus preparation step of preparing a processing apparatus which comprises: a hermetic container internally having a closeable processing space; a steam jetting device operable to jet high-temperature and high-pressure steam into the hermetic container; a supply section for supplying a raw material into the hermetic container; and a discharge section for discharging, to the outside, a processed liquid produced through processing of the raw material by the steam;
a raw material input step of inputting a raw material from the supply section into the processing space of the hermetic container of the processing apparatus, wherein the raw material comprises a herbaceous plant material formed from a gramineous plant, and polysilica iron, as main sub-raw materials;
a processing step of subjecting the raw material to a subcritical water reaction processing, under stirring, while introducing steam having a temperature of 100 to 200°C and a pressure of 0.2 MPa (2 atm) to 2.5 MPa (25 atm) into the processing space in which the raw material is input, to obtain a mixed solution containing polysilica-iron fulvate; and
a polysilica-iron fulvate solution taking-out step of separating the polysilica-iron fulvate from the obtained mixed solution to take out a polysilica-iron fulvate solution.

10. A polysilica-iron fulvate solution production method as recited in claim 9, further comprising a solid residue taking-out step of separating the solid residue obtained in the processing step, from the mixed solution to take out the solid residue; wherein
said polysilica-iron fulvate solution taking-out step is proceeded after said solid residue taking-out step.

## Patentansprüche

1. Verfahren zur Herstellung einer Eisenfulvat-Lösung, umfassend:
einen Gerätebereitstellungsschritt, der darin besteht, ein Behandlungsgerät bereitzustellen, welches Folgendes umfasst: einen fest schließenden Behälter, in dessen Innerem sich ein verschließbarer Behandlungsraum befindet; eine Dampfeinspritzvorrichtung, die derart betrieben werden kann, dass sie Hochtemperatur- und Hochdruckdampf in den fest schließenden Behälter einspritzt; einen Zufuhrabschnitt zum Zuführen eines Rohmaterials in den fest schließenden Behälter; und einen Abführabschnitt zum Abführen, in den Außenbereich, einer behandelten Flüssigkeit, die erzeugt wurde, indem das Rohmaterial mit dem Dampf behandelt wurde;
einen Rohmaterialbeschickungsschritt, der darin besteht, den Behandlungsraum des fest schließenden Behälters des Behandlungsgeräts ausgehend von dem Zufuhrabschnitt mit einem Rohmaterial zu beschicken, wobei das Rohmaterial ein holzartiges Pflanzenmaterial und ein Eisenmaterial als wesentliche Rohmaterialbestandteile umfasst;
einen Behandlungsschritt, der darin besteht, das Rohmaterial unter Rühren einer Reaktionsbehandlung mit überhitztem Wasser zu unterziehen, wobei in den Behandlungsraum, welcher mit dem Rohmaterial beschickt wurde, Dampf mit einer Temperatur von 120 bis 250 °C und einem Druck von 0,5 MPa (5 atm) bis 3,5 MPa (35 atm) eingeleitet wird, um eine Mischlösung zu erhalten, die Eisenfulvat enthält; und
einen Eisenfulvatlösungs-Entnahmeschritt, der darin besteht, das Eisenfulvat aus der erhaltenen Mischlösung abzutrennen, um eine Eisenfulvatlösung zu entnehmen.

2. Verfahren zur Herstellung einer Eisenfulvat-Lösung, umfassend:
einen Gerätebereitstellungsschritt, der darin besteht, ein Behandlungsgerät bereitzustellen, welches Folgendes umfasst: einen fest schließenden Behälter, in dessen Innerem sich ein verschließbarer Behandlungsraum befindet; eine Dampfeinspritzvorrichtung, die derart betrieben werden kann, dass sie Hochtemperatur- und Hochdruckdampf in den fest schließenden Behälter einspritzt; einen Zufuhrabschnitt zum Zuführen eines Rohmaterials in den fest schließenden Behälter; und einen Abführabschnitt zum Abführen, in den Außenbereich, einer behandelten Flüssigkeit, die erzeugt wurde, indem das Rohmaterial mit dem Dampf behandelt wurde;
einen Rohmaterialbeschickungsschritt, der darin besteht, den Behandlungsraum des fest schließenden Behälters des Behandlungsgeräts ausgehend von dem Zufuhrabschnitt mit einem Rohmaterial zu beschicken, wobei das Rohmaterial ein krautiges Pflanzenmaterial, welches aus einer gräserartigen Pflanze gebildet ist, und ein Eisenmaterial als wesentliche Rohmaterialbestandteile umfasst;
einen Behandlungsschritt, der darin besteht, das Rohmaterial unter Rühren einer Reaktionsbehandlung mit überhitztem Wasser zu unterziehen, wobei in den Behandlungsraum, welcher mit dem Rohmaterial beschickt wurde, Dampf mit einer Temperatur von 100 bis 200 °C und einem Druck von 0,2 MPa (2 atm) bis 2,5 MPa (25 atm) eingeleitet wird, um eine Mischlösung zu erhalten, die Eisenfulvat enthält; und
einen Eisenfulvatlösungs-Entnahmeschritt, der darin besteht, das Eisenfulvat aus der erhaltenen Mischlösung abzutrennen, um eine Eisenfulvatlösung zu entnehmen.

3. Verfahren zur Herstellung einer EisenhydroxidfulvatLösung, umfassend:
einen Gerätebereitstellungsschritt, der darin besteht, ein Behandlungsgerät bereitzustellen, welches Folgendes umfasst: einen fest schließenden Behälter, in dessen Innerem sich ein verschließbarer Behandlungsraum befindet; eine Dampfeinspritzvorrichtung, die derart betrieben werden kann, dass sie Hochtemperatur- und Hochdruckdampf in den fest schließenden Behälter einspritzt; einen Zufuhrabschnitt zum Zuführen eines Rohmaterials in den fest schließenden Behälter; und einen Abführabschnitt zum Abführen, in den Außenbereich, einer behandelten Flüssigkeit, die erzeugt wurde, indem das Rohmaterial mit dem Dampf behandelt wurde;
einen Rohmaterialbeschickungsschritt, der darin besteht, den Behandlungsraum des fest schließenden Behälters des Behandlungsgeräts ausgehend von dem Zufuhrabschnitt mit einem Rohmaterial zu beschicken, wobei das Rohmaterial ein holzartiges Pflanzenmaterial und Eisenhydroxid als wesentliche Rohmaterialbestandteile umfasst;
einen Behandlungsschritt, der darin besteht, das Rohmaterial unter Rühren einer Reaktionsbehandlung mit überhitztem Wasser zu unterziehen, wobei in den Behandlungsraum, welcher mit dem Rohmaterial beschickt wurde, Dampf mit einer Temperatur von 120 bis 250 °C und einem Druck von 0,5 MPa (5 atm) bis 3,5 MPa (35 atm) eingeleitet wird, um eine Mischlösung zu erhalten, die Eisenhydroxidfulvat enthält; und
einen Eisenhydroxidfulvatlösungs-Entnahmeschritt, der darin besteht, das Eisenhydroxidfulvat aus der erhaltenen Mischlösung abzutrennen, um eine Eisenhydroxidfulvatlösung zu entnehmen.

4. Verfahren zur Herstellung einer EisenhydroxidfulvatLösung gemäß Anspruch 3, wobei es weiterhin einen Festrückstands-Entnahmeschritt umfasst, der darin besteht, den festen Rückstand, welcher in dem Behandlungsschritt erhalten wurde, von der Mischlösung abzutrennen, um den festen Rückstand zu entnehmen; wobei der Eisenhydroxidfulvatlösungs-Entnahmeschritt nach dem Festrückstands-Entnahmeschritt erfolgt.

5. Verfahren zur Herstellung einer EisenhydroxidfulvatLösung, umfassend: einen Gerätebereitstellungsschritt, der darin besteht, ein Behandlungsgerät bereitzustellen, welches Folgendes umfasst: einen fest schließenden Behälter, in dessen Innerem sich ein verschließbarer Behandlungsraum befindet; eine Dampfeinspritzvorrichtung, die derart betrieben werden kann, dass sie Hochtemperatur- und Hochdruckdampf in den fest schließenden Behälter einspritzt; einen Zufuhrabschnitt zum Zuführen eines Rohmaterials in den fest schließenden Behälter; und einen Abführabschnitt zum Abführen, in den Außenbereich, einer behandelten Flüssigkeit, die erzeugt wurde, indem das Rohmaterial mit dem Dampf behandelt wurde;
einen Rohmaterialbeschickungsschritt, der darin besteht, den Behandlungsraum des fest schließenden Behälters des Behandlungsgeräts ausgehend von dem Zufuhrabschnitt mit einem Rohmaterial zu beschicken, wobei das Rohmaterial ein krautiges Pflanzenmaterial, welches aus einer gräserartigen Pflanze gebildet ist, und Eisenhydroxid als wesentliche Rohmaterialbestandteile umfasst;
einen Behandlungsschritt, der darin besteht, das Rohmaterial unter Rühren einer Reaktionsbehandlung mit überhitztem Wasser zu unterziehen, wobei in den Behandlungsraum, welcher mit dem Rohmaterial beschickt wurde, Dampf mit einer Temperatur von 100 bis 200 °C und einem Druck von 0,2 MPa (2 atm) bis 2,5 MPa (25 atm) eingeleitet wird, um eine Mischlösung zu erhalten, die Eisenhydroxidfulvat enthält; und
einen Eisenhydroxidfulvatlösungs-Entnahmeschritt, der darin besteht, das Eisenhydroxidfulvat aus der erhaltenen Mischlösung abzutrennen, um eine Eisenhydroxidfulvatlösung zu entnehmen.

6. Verfahren zur Herstellung einer EisenhydroxidfulvatLösung gemäß Anspruch 5, wobei es weiterhin einen Festrückstands-Entnahmeschritt umfasst, der darin besteht, den festen Rückstand, welcher in dem Behandlungsschritt erhalten wurde, von der Mischlösung abzutrennen, um den festen Rückstand zu entnehmen; wobei der Eisenhydroxidfulvatlösungs-Entnahmeschritt nach dem Festrückstands-Entnahmeschritt erfolgt.

7. Verfahren zur Herstellung einer Polykieselsäure-Eisenfulvat-Lösung, umfassend:
einen Gerätebereitstellungsschritt, der darin besteht, ein Behandlungsgerät bereitzustellen, welches Folgendes umfasst: einen fest schließenden Behälter, in dessen Innerem sich ein verschließbarer Behandlungsraum befindet; eine Dampfeinspritzvorrichtung, die derart betrieben werden kann, dass sie Hochtemperatur- und Hochdruckdampf in den fest schließenden Behälter einspritzt; einen Zufuhrabschnitt zum Zuführen eines Rohmaterials in den fest schließenden Behälter; und einen Abführabschnitt zum Abführen, in den Außenbereich, einer behandelten Flüssigkeit, die erzeugt wurde, indem das Rohmaterial mit dem Dampf behandelt wurde;
einen Rohmaterialbeschickungsschritt, der darin besteht, den Behandlungsraum des fest schließenden Behälters des Behandlungsgeräts ausgehend von dem Zufuhrabschnitt mit einem Rohmaterial zu beschicken, wobei das Rohmaterial ein holzartiges Pflanzenmaterial und Polykieselsäure-Eisen als wesentliche Rohmaterialbestandteile umfasst;
einen Behandlungsschritt, der darin besteht, das Rohmaterial unter Rühren einer Reaktionsbehandlung mit überhitztem Wasser zu unterziehen, wobei in den Behandlungsraum, welcher mit dem Rohmaterial beschickt wurde, Dampf mit einer Temperatur von 120 bis 250 °C und einem Druck von 0,5 MPa (5 atm) bis 3,5 MPa (35 atm) eingeleitet wird, um eine Mischlösung zu erhalten, die Polykieselsäure-Eisenfulvat enthält; und
einen Polykieselsäure-Eisenfulvatlösungs-Entnahmeschritt, der darin besteht, das Polykieselsäure-Eisenfulvat aus der erhaltenen Mischlösung abzutrennen, um eine Polykieselsäure-Eisenfulvatlösung zu entnehmen.

8. Verfahren zur Herstellung einer Polykieselsäure-Eisenfulvat-Lösung gemäß Anspruch 7, wobei es weiterhin einen Festrückstands-Entnahmeschritt umfasst, der darin besteht, den festen Rückstand, welcher in dem Behandlungsschritt erhalten wurde, von der Mischlösung abzutrennen, um den festen Rückstand zu entnehmen; wobei der Polykieselsäure-Eisenfulvatlösungs-Entnahmeschritt nach dem Festrückstands-Entnahmeschritt erfolgt.

9. Verfahren zur Herstellung einer Polykieselsäure-Eisenfulvat-Lösung, umfassend:
einen Gerätebereitstellungsschritt, der darin besteht, ein Behandlungsgerät bereitzustellen, welches Folgendes umfasst: einen fest schließenden Behälter, in dessen Innerem sich ein verschließbarer Behandlungsraum befindet; eine Dampfeinspritzvorrichtung, die derart betrieben werden kann, dass sie Hochtemperatur- und Hochdruckdampf in den fest schließenden Behälter einspritzt; einen Zufuhrabschnitt zum Zuführen eines Rohmaterials in den fest schließenden Behälter; und einen Abführabschnitt zum Abführen, in den Außenbereich, einer behandelten Flüssigkeit, die erzeugt wurde, indem das Rohmaterial mit dem Dampf behandelt wurde;
einen Rohmaterialbeschickungsschritt, der darin besteht, den Behandlungsraum des fest schließenden Behälters des Behandlungsgeräts ausgehend von dem Zufuhrabschnitt mit einem Rohmaterial zu beschicken, wobei das Rohmaterial ein krautiges Pflanzenmaterial, welches aus einer gräserartigen Pflanze gebildet ist, und Polykieselsäure-Eisen als wesentliche Rohmaterialbestandteile umfasst;
einen Behandlungsschritt, der darin besteht, das Rohmaterial unter Rühren einer Reaktionsbehandlung mit überhitztem Wasser zu unterziehen, wobei in den Behandlungsraum, welcher mit dem Rohmaterial beschickt wurde, Dampf mit einer Temperatur von 100 bis 200 °C und einem Druck von 0,2 MPa (2 atm) bis 2,5 MPa (25 atm) eingeleitet wird, um eine Mischlösung zu erhalten, die Polykieselsäure-Eisenfulvat enthält; und
einen Polykieselsäure-Eisenfulvatlösungs-Entnahmeschritt, der darin besteht, das Polykieselsäure-Eisenfulvat aus der erhaltenen Mischlösung abzutrennen, um eine Polykieselsaure-Eisenfulvatlösung zu entnehmen.

10. Verfahren zur Herstellung einer Polykieselsäure-Eisenfulvat-Lösung gemäß Anspruch 9, wobei es weiterhin einen Festrückstands-Entnahmeschritt umfasst, der darin besteht, den festen Rückstand, welcher in dem Behandlungsschritt erhalten wurde, von der Mischlösung abzutrennen, um den festen Rückstand zu entnehmen; wobei der Polykieselsäure-Eisenfulvatlösungs-Entnahmeschritt nach dem Festrückstands-Entnahmeschritt erfolgt.

## Revendications

1. Procédé de production de solution de fulvate de fer comprenant :
une étape de préparation d'un appareil pour préparer un appareil de traitement qui comprend : un récipient hermétique à l'intérieur duquel se trouve un espace de traitement pouvant être fermé ; un dispositif de projection de vapeur conçu pour projeter de la vapeur à haute température et à haute pression dans le récipient hermétique ; une section d'alimentation destinée à alimenter en matière première le récipient hermétique ; et une section d'évacuation destinée à évacuer vers l'extérieur un liquide traité produit par traitement de la matière première à l'aide de la vapeur ;
une étape d'entrée de matière première afin de faire passer une matière première de la section d'alimentation à l'espace de traitement du récipient hermétique de l'appareil de traitement, ladite matière première comprenant un matériel végétal ligneux et un matériel de fer, comme principales sous-matières premières ;
une étape de traitement afin de soumettre la matière première à un traitement par réaction en eau subcritique, sous agitation, tout en introduisant de la vapeur ayant une température de 120 à 250°C et une pression de 0,5 MPa (5 atm) à 3,5 MPa (35 atm) dans l'espace de traitement dans lequel la matière première est entrée,
pour obtenir une solution mixte contenant du fulvate de fer ; et
une étape d'extraction de la solution de fulvate de fer afin de séparer le fulvate de fer de la solution mixte obtenue pour en extraire une solution de fulvate de fer.

2. Procédé de production de solution de fulvate de fer comprenant :
une étape de préparation d'un appareil afin de préparer un appareil de traitement qui comprend : un récipient hermétique à l'intérieur duquel se trouve un espace de traitement pouvant être fermé ; un dispositif de projection de vapeur conçu pour projeter de la vapeur à haute température et à haute pression dans le récipient hermétique ; une section d'alimentation destinée à alimenter en matière première le récipient hermétique ; et une section d'évacuation destinée à évacuer vers l'extérieur un liquide traité produit par traitement de la matière première à l'aide de la vapeur ;
une étape d'entrée de matière première afin de faire passer une matière première de la section d'alimentation à l'espace de traitement du récipient hermétique de l'appareil de traitement, ladite matière première comprenant un matériel végétal herbacé formé à partir d'une plante graminée, et un matériel de fer, comme principales sous-matières premières ;
une étape de traitement afin de soumettre la matière première à un traitement par réaction en eau subcritique, sous agitation, tout en introduisant de la vapeur ayant une température de 100 à 200°C et une pression de 0,2 MPa (2 atm) à 2,5 MPa (25 atm) dans l'espace de traitement dans lequel la matière première est entrée,
pour obtenir une solution mixte contenant du fulvate de fer ; et
une étape d'extraction de la solution de fulvate de fer afin de séparer le fulvate de fer de la solution mixte obtenue pour en extraire une solution de fulvate de fer.

3. Procédé de production de solution de fulvate d'hydroxyde de fer comprenant :
une étape de préparation d'un appareil afin de préparer un appareil de traitement qui comprend : un récipient hermétique à l'intérieur duquel se trouve un espace de traitement pouvant être fermé ; un dispositif de projection de vapeur conçu pour projeter de la vapeur à haute température et à haute pression dans le récipient hermétique ; une section d'alimentation destinée à alimenter en matière première le récipient hermétique ; et une section d'évacuation destinée à évacuer vers l'extérieur un liquide traité produit par traitement de la matière première à l'aide de la vapeur ;
une étape d'entrée de matière première afin de faire passer une matière première de la section d'alimentation à l'espace de traitement du récipient hermétique de l'appareil de traitement, ladite matière première comprenant un matériel végétal ligneux et de l'hydroxyde de fer, comme principales sous-matières premières ;
une étape de traitement afin de soumettre la matière première à un traitement par réaction en eau subcritique, sous agitation, tout en introduisant de la vapeur ayant une température de 120 à 250°C et une pression de 0,5 MPa (5 atm) à 3,5 MPa (35 atm) dans l'espace de traitement dans lequel la matière première est entrée,
pour obtenir une solution mixte contenant du fulvate d'hydroxyde de fer ; et
une étape d'extraction de la solution de fulvate d'hydroxyde de fer afin de séparer le fulvate d'hydroxyde de fer de la solution mixte obtenue pour en extraire une solution de fulvate d'hydroxyde de fer.

4. Procédé de production de solution de fulvate d'hydroxyde de fer comme indiqué dans la revendication 3, comprenant en outre une étape d'extraction du résidu solide afin de séparer le résidu solide obtenu dans l'étape de traitement, de la solution mixte pour extraire le résidu solide ; dans lequel ladite étape d'extraction de la solution de fulvate d'hydroxyde de fer est effectuée après ladite étape d'extraction du résidu solide.

5. Procédé de production de solution de fulvate d'hydroxyde de fer comprenant :
une étape de préparation de l'appareil afin de préparer un appareil de traitement qui comprend : un récipient hermétique à l'intérieur duquel se trouve un espace de traitement pouvant être fermé ; un dispositif de projection de vapeur conçu pour projeter de la vapeur à haute température et à haute pression dans le récipient hermétique ; une section d'alimentation destinée à alimenter en matière première le récipient hermétique ; et une section d'évacuation destinée à évacuer vers l'extérieur un liquide traité produit par traitement de la matière première à l'aide de la vapeur ;
une étape d'entrée de matière première afin de faire passer une matière première de la section d'alimentation à l'espace de traitement du récipient hermétique de l'appareil de traitement, ladite matière première comprenant un matériel végétal herbacé formé à partir d'une plante graminée. et de l'hydroxyde de fer, comme principales sous-matières premières ;
une étape de traitement afin de soumettre la matière première à un traitement par réaction en eau subcritique, sous agitation, tout en introduisant de la vapeur ayant une température de 100 à 200°C et une pression de 0,2 MPa (2 atm) à 2,5 MPa (25 atm) dans l'espace de traitement dans lequel la matière première est entrée,
pour obtenir une solution mixte contenant du fulvate d'hydroxyde de fer ; et
une étape d'extraction de la solution de fulvate d'hydroxyde de fer afin de séparer le fulvate d'hydroxyde de fer de la solution mixte obtenue pour en extraire une solution de fulvate d'hydroxyde de fer.

6. Procédé de production de solution de fulvate d'hydroxyde de fer comme indiqué dans la revendication 5, comprenant en outre une étape d'extraction du résidu solide afin de séparer le résidu solide obtenu dans l'étape de traitement, de la solution mixte pour extraire le résidu solide ; dans lequel ladite étape d'extraction de la solution de fulvate d'hydroxyde de fer est effectuée après ladite étape d'extraction du résidu solide.

7. Procédé de production de solution de fulvate de polysilice-fer comprenant :
une étape de préparation d'un appareil afin de préparer un appareil de traitement qui comprend : un récipient hermétique à l'intérieur duquel se trouve un espace de traitement pouvant être fermé ; un dispositif de projection de vapeur conçu pour projeter de la vapeur à haute température et à haute pression dans le récipient hermétique ; une section d'alimentation destinée à alimenter en matière première le récipient hermétique ; et une section d'évacuation destinée à évacuer vers l'extérieur un liquide traité produit par traitement de la matière première à l'aide de la vapeur ;
une étape d'entrée de matière première afin de faire passer une matière première de la section d'alimentation à l'espace de traitement du récipient hermétique de l'appareil de traitement, ladite matière première comprenant un matériel végétal ligneux et du polysilice-fer, comme principales sous-matières premières ;
une étape de traitement afin de soumettre la matière première à un traitement par réaction en eau subcritique, sous agitation, tout en introduisant de la vapeur ayant une température de 120 à 250°C et une pression de 0,5 MPa (5 atm) à 3,5 MPa (35 atm) dans l'espace de traitement dans lequel la matière première est entrée,
pour obtenir une solution mixte contenant du fulvate de polysilice-fer ; et
une étape d'extraction de la solution de fulvate de polysilice-fer afin de séparer le fulvate de polysilice-fer de la solution mixte obtenue pour en extraire une solution de fulvate de polysilice-fer.

8. Procédé de production de solution de fulvate de polysilice-fer comme indiqué dans la revendication 7, comprenant en outre une étape d'extraction du résidu solide afin de séparer le résidu solide obtenu dans l'étape de traitement, de la solution mixte pour extraire le résidu solide : dans lequel ladite étape d'extraction de la solution de fulvate de polysilice-fer est effectuée après ladite étape d'extraction du résidu solide.

9. Procédé de production de solution de fulvate de polysilice-fer comprenant :
une étape de préparation d'un appareil afin de préparer un appareil de traitement qui comprend : un récipient hermétique à l'intérieur duquel se trouve un espace de traitement pouvant être fermé ; un dispositif de projection de vapeur conçu pour projeter de la vapeur à haute température et à haute pression dans le récipient hermétique ; une section d'alimentation destinée à alimenter en matière première le récipient hermétique ; et une section d'évacuation destinée à évacuer vers l'extérieur un liquide traité produit par traitement de la matière première à l'aide de la vapeur ;
une étape d'entrée de matière première afin de faire passer une matière première de la section d'alimentation à l'espace de traitement du récipient hermétique de l'appareil de traitement, ladite matière première comprenant un matériel végétal herbacé formé à partir d'une plante graminée, et du polysilice-fer, comme principales sous-matières premières ;
une étape de traitement afin de soumettre la matière première à un traitement par réaction en eau subcritique, sous agitation, tout en introduisant de la vapeur ayant une température de 100 à 200°C et une pression de 0.2 MPa (2 atm) à 2.5 MPa (25 atm) dans l'espace de traitement dans lequel la matière première est entrée.
pour obtenir une solution mixte contenant du fulvate de polysilice-fer ; et
une étape d'extraction de la solution de fulvate de polysilice-fer afin de séparer le fulvate de polysilice-fer de la solution mixte obtenue pour en extraire une solution de fulvate de polysilice-fer.

10. Procédé de production de solution de fulvate de polysilice-fer comme indiqué dans la revendication 9, comprenant en outre une étape d'extraction du résidu solide afin de séparer le résidu solide obtenu dans l'étape de traitement, de la solution mixte pour extraire le résidu solide ; dans lequel ladite étape d'extraction de la solution de fulvate de polysilice-fer est effectuée après ladite étape d'extraction du résidu solide.
